(19) **Europäisches Patentamt**

**European Patent Office**

**Office européen des brevets**

(11) **EP 0 731 635 B1**

(12) **FASCICULE DE BREVET EUROPEEN**

(45) Date de publication et mention
de la délivrance du brevet:
**03.05.2000 Bulletin 2000/18**

(21) Numéro de dépôt: **95902825.9**

(22) Date de dépôt: **02.12.1994**

(51) Int. Cl.⁷: **A01N 25/14**, A01N 53/00

(86) Numéro de dépôt international:
**PCT/FR94/01407**

(87) Numéro de publication internationale:
**WO 95/15081 (08.06.1995 Gazette 1995/24)**

(54) **GRANULES EMULSIONNABLES DANS L'EAU, LEUR PROCEDE DE PREPARATION ET LEUR APPLICATION COMME PESTICIDES**

**IN WASSER EMULGIERBARE GRANULATE, VERFAHREN ZU DEREN HERSTELLUNG UND DEREN VERWENDUNG ALS SCHÄDLINGSBEKÄMPUNGSMITTEL**

**WATER EMUSIFIABLE GRANULES, PREPARATION PROCESS AND APPLICATION AS PESTICIDES**

(84) Etats contractants désignés:
**AT BE CH DE DK ES FR GB GR IE IT LI LU NL PT SE**

(30) Priorité: **03.12.1993 FR 9314504**

(43) Date de publication de la demande:
**18.09.1996 Bulletin 1996/38**

(73) Titulaire:
**Hoechst Schering AgrEvo S.A.**
**75020 Paris (FR)**

(72) Inventeurs:
• **FAVALORO, Jean-Paul**
**F-13007 Marseille (FR)**

• **HENRIET, Michel**
**F-13390 Auriol (FR)**
• **SCHOENI, Jean-Paul**
**D-65195 Wiesbaden (DE)**

(74) Mandataire:
**Tonnellier, Marie-José et al**
**Hoechst Marion Roussel**
**Département des Brevets**
**102, Route de Noisy**
**93235 Romainville Cédex (FR)**

(56) Documents cités:
**EP-A- 0 017 738          EP-A- 0 237 227**
**EP-A- 0 498 332          EP-A- 0 561 265**
**WO-A-90/08467          GB-A- 2 210 884**
**GB-A- 2 230 700**

**Description**

La présente invention concerne des granulés émulsionnables dans l'eau, leur procédé de préparation et leur application comme pesticides.

On connaissait des granulés émulsionnables dans l'eau renfermant des pyréthrinoïdes (EP 0561265, EP 04983332).

On connaissait des granulés émulsionnables dans l'eau renfermant des pyréthrinoïdes et des insecticides tel que le carbamate (EP 0237227).

L'invention a pour objet les granulés émulsionnables dans l'eau renfermant en quantités pondérales :

- de 0,1 à 10 % de pyréthrinoïdes,
- de 5 à 50 % d'insecticides non pyréthrinoïdes, choisis dans la classe des carbamates, dilués avec de la silice,
- de 5 à 70 % de solvant aromatique,
- de 10 à 70 % d'un ou plusieurs polymères solubles dans l'eau permettant d'adsorber une solution organique de pyréthrinoïde.

Les granulés de l'invention sont simples à préparer, faciles à utiliser et présentent de plus une excellente stabilité ainsi qu'une excellente activité pesticide comme le montrent les résultats de tests biologiques joints en annexe.

Comme polymères hydrosolubles, on peut citer les alcools polyvinyliques ou encore des polyvinylpyrrolidones, de la gélatine, de la gomme arabique, de l'alginate de sodium, des dérivés de l'amidon et de la cellulose (par exemple Tylosen®), de l'hydroxyméthylcellulose, ou encore les mélanges de ces composés.

L'invention a plus particulièrement pour objet les granulés dans lesquels le ou les polymères hydrosolubles sont des alcools polyvinyliques.

On a obtenu des résultats particulièrement intéressants en utilisant des granulés renfermant de 25 à 55 % d'une association de deux polymères hydrosolubles de caractère hydrophile différent, par exemple en utilisant à la fois l'alcool polyvinylique obtenu par hydrolyse partielle d'acétate de polyvinyle de viscosité 3 mPa.s ou Mowiol 3/83® et l'alcool polyvinylique obtenu par hydrolyse partielle d'acétate de polyvinyle, de viscosité 4 mPa.s ou Mowiol 4/88®.

L'invention a plus particulièrement pour objet les granulés renfermant en outre, en quantité pondérale de 0,1 à 20 % d'un ou plusieurs agents dispersants, de 0 à 10 % d'un agent mouillant, de 0,1 à 3 % d'un agent stabilisant de 0 à 20% d'un agent diluant et de 0 à 0,5% d'un colorant et de préférence de 2 à 15 % d'un ou plusieurs agents dispersants, de 0 à 6 % d'un agent mouillant, de 0,5 à 2 % d'un agent stabilisant, de 0 à 10% d'un agent diluant et de 0 à 0,05% d'un colorant.

Parmi les pyréthrinoïdes utilisables pour la préparation des granulés de l'invention, on peut citer la deltaméthrine, la cyperméthrine, l'alphaméthrine, la tralométhrine, la cyalothrine, le fenvalérate, la cyfluthrine, le flucythrinate, le fluvalinate, la fenpropathrine, la téfluthrine, la bifenthrine, l'acrinathrine, l'esfenvalérate, la bétacyfluthrine, la taufluvalinate ou la lambdacyhalothrine.

Comme pyréthrinoïde préféré, on peut citer la deltaméthrine.

Comme insecticides non pyréthrinoïdes, on peut utiliser des composés sous forme solide ou solidifiée, par exemple en adsorbant le principe actif liquide sur la silice.

On peut citer comme insecticides, associés aux pyréthrinoïdes, les composés de la classe des organophosphorés comme le trichlorfon, le diazinon, le fénitrothion, l'acéphate, le phosmet, les composés de la classe des organochlorés comme l'endosulfan, les composés de la classe des formamidines comme l'amitraze, les composés de la classe des sulfonates comme le tétradifon et la propargite, les composés de la classe des dérivés de l'acide benzhydroxamique comme le benzoximate, les composés de la classe des benzoylurées comme le benzfluazuron, les composés de la classe des thiadiazines comme le buprofézin, les composés de la classe des pyridazinones comme le pyridabène.

On peut citer de préférence comme insecticides associés aux pyréthrinoïdes, les carbamates comme le pyrimicarbe, le thiodicarbe, le carbaryl, le dioxacarbe, le méthomyl, l'aldicarbe, l'isoprocarbe, le thiofanox, le bendicarbe, le benfucarbe, le furathiocarbe et le thiazamate.

Comme carbamate préféré, on peut citer le pyrimicarbe.

Comme solvant on peut citer les hydrocarbures aromatiques, comme le 1-méthylnaphtalène, le tétrahydronaphtalène, le décahydronaphtalène, le 2-méthylnaphtalène ou le diméthylnaphtalène, les alkylbenzènes, le xylène, (dont le Solvesso 200®), les mélanges d'isomères du dibenzyltoluène comme le Marlotherm S® ou les mélanges d'isomères du benzyltoluène (Marlotherm L®), les hydrocarbures aliphatiques, comme les huiles minérales ou végétales, les alcools comme le cyclohexanol, les alcools en C$_8$, les éthers comme le dibenzyléther, les cétones comme la cyclohexanone, la 4-méthylcyclohexanone, les amides comme le N,N-diméthylcaprylamide-capramide (HALLCOMID® M 8-10), les esters comme les benzoates d'alkyle (d'éthyle, de propyle, de n-butyle par exemple), les phtalates de mono et dialkyle (d'éthyle, de propyle ou de n-butyle, par exemple), les pyrrolidones comme la N-méthylpyrrolidone, la N-octylpyrrolidone (AG SOL EX 8®), la N-dodécylpyrrolidone (AG SOL EX 12®), la N-cyclohexylpyrrolidone ou encore des mélanges de ces solvants.

Comme solvant préféré, on peut citer le SOLVESSO 200® EXXON.

L'agent mouillant peut être un agent tensioactif ionique ou non ionique ou un mélange de tels agents tensioactifs.

Comme composés utilisables en tant qu'agent mouillant, on peut citer par exemple, les sels de type alkyl sulfate (par exemple : le lauryl sulfate de sodium (SIPON LCS 98®), les sels de type alkyl éther sulfate (par exemple : le lauryl éther sulfate de sodium), les sels de type alkylaryl sulfonate, notamment les alkylnaphtalène sulfonate alcalins, les sels d'acides polycarboxyliques, les polycondensats d'oxyde d'éthylène sur des alcools gras ou sur des acides gras ou sur des amines grasses, les phénols substitués, notamment les alkylphénols ou des arylphénols, les sels d'esters d'acides sulfosucciniques, les sels d'α-oléfines sulfonates, des dérivés de la taurine, notamment les alkyltaurates (par exemple : le méthyltaurate d'oléyle).

L'agent dispersant peut être un agent tensioactif ionique ou non ionique ou un mélange de tels agents tensioactifs.

Comme composés utilisables en tant qu'agent dispersant, on peut citer par exemple, les polymères de type arylsulfonate, notamment les polynaphtalènes sulfonates alcalins obtenus par condensation de dérivés (alkyl) aryl sulfonates avec du formaldéhyde, les condensats sulfonés de phénol et de crésol avec du formaldéhyde (par exemple l'agent dispersant HOE 1494 ®), les lignosulfonates (par exemple : le lignosulfonate de sodium et le lignosulfonate de calcium), les polyphényl sulfonates, les sels d'acides polyacryliques, les sels d'acides lignosulfoniques (par exemple : le sel de sodium d'acides lignosulfoniques polymérisés de type Kraft), les sels d'acides phénols sulfoniques ou naphtalène sulfoniques, les esters phosphoriques d'alcools ou de phénols polyéthoxylés, les esters d'acides gras et de polyols, les dérivés à fonction sulfates, sulfonates et phosphates des composés précédents.

L'agent diluant peut être de préférence une silice colloïdale précipitée (Wessalon S®) ou pyrogénée soit une argile de type kaolinite (Argirec B24®).

L'invention a tout spécialement pour objet les granulés renfermant en quantité pondérale :

- de 0,5 à 2 % de deltaméthrine,
- de 15 à 50 % de pyrimicarbe,
- de 20 à 30 % d'alcool polyvinylique de viscosité 3 mPa.s ou Mowiol 3/83®
- de 10 à 20 % d'alcool polyvinylique de viscosité 4 mPa.s ou Mowiol 4/88®
- et de 10 à 20 % d'hydrocarbure aromatique SOLVESSO 200® EXXON

et notamment les granulés renfermant en outre :

- de 0 à 6 % de lauryl sulfate de sodium (mouillant),
- de 0,2 à 1 % d'acide citrique (stabilisant),
- de 5 à 10 % de polycondensat d'alkylnaphtalène sulfonate de sodium et de formol ou de 2 à 12% de condensat sulfoné de phénol et de crésol avec du formaldéhyde (dispersant),
- de 0 à 6% de sel de sodium d'acides lignosulfoniques polymérisés,
- jusqu'à 10% de silice,
- de 0 à 0,05% de colorant.

Les granulés de l'invention ont une granulométrie comprise entre 0,1 et 4 mm.

L'invention a plus spécialement pour objet les granulés de diamètre compris entre 0,1 et 3 mm et de préférence entre 0,15 et 2 mm.

Les granulés de l'invention se caractérisent par un temps de mouillabilité "TM" qui varie entre 1 seconde et 3 minutes, de préférence entre 1 et 60 secondes, un taux de dispersabilité "TD" qui varie entre 10 et 90 % de préférence entre 30 et 75 %, et un taux de suspensabilité "TS" qui varie entre 10 et 90 % et de préférence entre 30 et 75 %.

Le temps de mouillabilité est mesuré selon la technique MT 53.3 décrite dans le CIPAC HANDBOOK, volume 1, pages 966-967, édité par G.R. RAW en 1970. Il consiste essentiellement à mesurer le temps de mouillage de 5 g de granulés versés dans 100 ml d'eau.

Le taux de dispersabilité est mesuré selon la technique définie dans la méthode MT 174 adoptée par le CIPAC en 1991. Cette méthode consiste essentiellement à verser 10 g de granulés dans un bécher de 1000 ml d'eau dure (- CIPAC D - définie dans la méthode MT 18.1.4 décrite dans le CIPAC HANDBOOK, volume 1, pages 875-879). On agite le contenu du bécher pendant 1 minute et on laisse reposer pendant 1 minute, on soustrait 90 % de la suspension ; on sèche les 10 % de contenu restant et pèse le résidu ; le taux de dispersabilité est alors exprimé par le pourcentage de granulés resté en suspension.

Le taux de suspensibilité est mesuré selon la technique définie dans la méthode MT 168 adoptée par le CIPAC en 1989. Cette méthode consiste essentiellement à verser 2,5 g de granulés dans une éprouvette de 250 ml contenant 250 ml d'eau dure - CIPAC D -, à retourner 30 fois l'éprouvette et son contenu, à laisser reposer 30 minutes et à mesurer la masse de matière contenue dans les 25 ml inférieurs de l'éprouvette (10 % du volume de l'éprouvette) ; le taux de suspensibilité est alors exprimé par le pourcentage de matière restante en suspension dans les 90 % supérieurs de l'éprouvette.

L'invention a également pour objet un procédé de préparation caractérisé en ce que :

1 - on prépare une émulsion du type "huile dans l'eau"

-    en préparant d'une part une phase aqueuse A, en dissolvant un polymère hydrosoluble dans l'eau,
-    en préparant d'autre part une phase organique B par dissolution du pyréthrinoïde dans un solvant aromatique,
-    en ajoutant la phase organique B dans la phase aqueuse A et en homogénéisant l'émulsion ainsi obtenue,

2 - on prépare une poudre contenant le carbamate en mélangeant le carbamate sous forme de premix broyé avec de la silice, avec un ou plusieurs des éléments suivants : un ou plusieurs polymères hydrosolubles, un mouillant, un ou plusieurs dispersants, avec ou sans un mouillant, avec ou sans un agent diluant,
3 - on introduit la poudre préparée en pied de cuve dans un granulateur,
4 - on pulvérise dans un granulateur l'émulsion de type "huile dans l'eau" sur la poudre en mouvement dans un courant d'air (granulation à contre-courant),
5 - on sèche les granulés ainsi obtenus,
6 - on tamise les granulés obtenus pour obtenir la granulométrie souhaitée.

Dans un mode de réalisation préféré, la dissolution du polymère hydrosoluble est favorisée par la chaleur (préparation de la phase aqueuse), la quantité de solvant utilisée est le double de la concentration finale, l'homogénéisation de l'émulsion s'effectue au moyen d'un appareil dit ultra-disperseur qui permet d'obtenir de fines gouttelettes huileuses.

La poudre renfermant le carbamate est mélangée à un ou plusieurs polymères hydrosolubles.

La pulvérisation de l'émulsion huile dans l'eau est réalisée à l'aide d'une buse calibrée bifluide à co-courant (c'est-à-dire permettant le passage de l'émulsion "huile dans l'eau" et l'air comprimé, sur la poudre en mouvement dans un courant d'air dont la température à l'entrée du granulateur est de 30-60°C et de préférence entre 35 et 40°C.

Le séchage a lieu entre 40 et 80°C et de préférence entre 45 et 70°C.

La quantité d'eau évaporée est comprise entre 25 et 50 % de préférence entre 35 et 45 %, tandis que la quantité de solvant à savoir l'hydrocarbure aromatique est comprise entre 25 et 70 % de préférence entre 40 et 55 %.

L'invention a plus spécialement pour objet un procédé caractérisé en ce que la granulation est une granulation dans un flux d'air.

On peut également utiliser d'autres procédés de granulation comme la granulation par extrusion ou la granulation sur un plateau tournant.

L'invention a tout spécialement pour objet un procédé caractérisé en ce que pour obtenir l'émulsion du type huile dans l'eau, on utilise une phase aqueuse renfermant du Mowiol 3/83®, et que pour préparer la poudre utilisée en pied de cuve, on mélange le carbamate avec un mélange de Mowiol 3/83® et de Mowiol 4/88®.

L'invention a également pour objet les compositions pesticides destinées au traitement des cultures obtenues en émulsionnant dans l'eau les granulés ci-dessus.

Les compositions de l'invention trouvent leur utilisation dans le domaine pesticide, pour lutter contre les parasites que l'on peut éliminer à l'aide du pyréthrinoïde, et ceux que l'on peut éliminer à l'aide du carbamate.

L'invention a également pour objet l'application, caractérisée en ce que l'on répand lesdites compositions à raison de 4,5 à 50 g de pyréthrinoïde par hectare et de 100 à 200 g de carbamate par hectare, et plus particulièrement de 5 à 7,5 g de deltaméthrine par hectare et de 100 à 150 g de pyrimicarbe par hectare.

L'exemple biologique détaillé ci-après met bien en évidence les excellentes qualités des formulations de l'invention.

**Exemples de granulés selon l'invention.**

<u>**EXEMPLE 1 :**</u>

On a préparé des granulés répondant à la formulation suivate :

| | % p/p |
|---|---|
| Deltaméthrine tech. (98,5 %) | 1,02 |
| Pyrimicarbe prémix broyé (85,0 %) | 23,60 |
| Alcool polyvinylique obtenu par hydrolyse partielle d'acétate de polyvinyle (83 mole %) de viscosité 3 mPa.s en solution aqueuse à 4 % (polymère hydrosoluble) (1) | 26,00 |
| Alcool polyvinylique obtenu par hydrolyse partielle d'acétate de polyvinyle (88 mole %) de viscosité 4 mPa.s en solution aqueuse à 4 % (polymère hydrosoluble) (2) | 17,00 |
| Polycondensat d'alkylnaphtalène sulfonate de sodium et de formol (dispersant) (3) | 9,50 |
| Sel de sodium d'acides lignosulfoniques polymérisés de type Kraft (dispersant) (4) | 3,00 |
| Lauryl sulfate de sodium (mouillant) (5) | 4,50 |
| Acide citrique (stabilisant) | 0,38 |
| Hydrocarbure aromatique (solvant) (6) | 15,00 |

**EXEMPLE 2 :**

On a préparé des granulés répondant à la formulation suivante :

| | % p/p |
|---|---|
| Deltaméthrine tech. (98,5 %) | 1,52 |
| Pyrimicarbe prémix broyé (85,0 %) | 23,60 |
| Alcool polyvinylique obtenu par hydrolyse partielle d'acétate de polyvinyle (83 mole %) de viscosité 3 mPa.s en solution aqueuse à 4 % (polymère hydrosoluble) (1) | 26,00 |
| Alcool polyvinylique obtenu par hydrolyse partielle d'acétate de polyvinyle (88 mole %) de viscosité 4 mPa.s en solution aqueuse à 4 % (polymère hydrosoluble) (2) | 17,00 |
| Polycondensat d'alkylnaphtalène sulfonate de sodium et de formol (dispersant) (3) | 9,00 |
| Sel de sodium d'acides lignosulfoniques polymérisés de type Kraft (dispersant) (4) | 3,00 |
| Lauryl sulfate de sodium (mouillant) (5) | 4,50 |
| Acide citrique (stabilisant) | 0,38 |
| Hydrocarbure aromatique (solvant) (6) | 15,00 |

**EXEMPLE 3 :**

On a préparé des granulés répondant à la formulation suivante :

| | % p/p |
|---|---|
| Deltaméthrine tech. (98,5 %) | 1,52 |
| Pyrimicarbe prémix broyé (85,0 %) | 35,30 |
| Alcool polyvinylique obtenu par hydrolyse partielle d'acétate de polyvinyle (83 mole %) de viscosité 3 mPa.s en solution aqueuse à 4 % (polymère hydrosoluble) (1) | 24,00 |

(suite)

|  | % p/p |
|---|---|
| Alcool polyvinylique obtenu par hydrolyse partielle d'acétate de polyvinyle (88 mole %) de viscosité 4 mPa.s en solution aqueuse à 4 % (polymère hydrosoluble) (2) | 18,80 |
| Silice (agent diluant) (7) | 8,00 |
| Acide citrique (stabilisant) | 0,35 |
| Solvent Green 28 (colorant) (8) | 0,03 |
| Hydrocarbure aromatique (solvant) (6) | 12,00 |

### EXEMPLE 4 :

On a préparé des granulés répondant à la formulation suivante :

|  | % p/p |
|---|---|
| Deltaméthrine tech. (98,5 %) | 1,52 |
| Pyrimicarbe prémix broyé (85,0 %) | 35,30 |
| Alcool polyvinylique obtenu par hydrolyse partielle d'acétate de polyvinyle (83 mole %) de viscosité 3 mPa.s en solution aqueuse à 4 % (polymère hydrosoluble) (1) | 24,00 |
| Alcool polyvinylique obtenu par hydrolyse partielle d'acétate de polyvinyle (88 mole %) de viscosité 4 mPa.s en solution aqueuse à 4 % (polymère hydrosoluble) (2) | 18,80 |
| Condensat sulfoné de phénol et de crésol avec le formaldéhyde (agent dispersant) (9) | 8,00 |
| Acide citrique (stabilisant) | 0,35 |
| Solvent Green 28 (colorant) (8) | 0,03 |
| Hydrocarbure aromatique (solvant) (6) | 12,00 |

### EXEMPLE 5 :

On a préparé des granulés répondant à la formulation suivante :

|  | % p/p |
|---|---|
| Deltaméthrine tech. (98,5 %) | 2,04 |
| Pyrimicarbe prémix broyé (85,0 %) | 47,06 |
| Alcool polyvinylique obtenu par hydrolyse partielle d'acétate de polyvinyle (83 mole %) de viscosité 3 mPa.s en solution aqueuse à 4 % (polymère hydrosoluble) (1) | 24,00 |
| Alcool polyvinylique obtenu par hydrolyse partielle d'acétate de polyvinyle (88 mole %) de viscosité 4 mPa.s en solution aqueuse à 4 % (polymère hydrosoluble) (2) | 8,50 |
| Condensat sulfoné de phénol et de crésol avec le formaldéhyde (agent dispersant) (9) | 4,00 |
| Acide citrique (stabilisant) | 0,365 |
| Solvent Green 28 (colorant) (8) | 0,035 |
| Hydrocarbure aromatique (solvant) (6) | 14,00 |

**EXEMPLE 6 :**

On a préparé des granulés répondant à la formulation suivante :

|  | % p/p |
|---|---|
| Deltaméthrine tech. (98,5 %) | 2,04 |
| Pyrimicarbe prémix broyé (85,0 %) | 47,06 |
| Alcool polyvinylique obtenu par hydrolyse partielle d'acétate de polyvinyle (83 mole %) de viscosité 3 mPa.s en solution aqueuse à 4 % (polymère hydrosoluble) (1) | 19,00 |
| Alcool polyvinylique obtenu par hydrolyse partielle d'acétate de polyvinyle (88 mole %) de viscosité 4 mPa.s en solution aqueuse à 4 % (polymère hydrosoluble) (2) | 4,00 |
| Condensat sulfoné de phénol et de crésol avec le formaldéhyde (agent dispersant) (9) | 8,00 |
| Acide citrique (stabilisant) | 0,365 |
| Solvent Green 28 (colorant) (8) | 0,035 |
| Hydrocarbure aromatique (solvant) (6) | 14,00 |
| Glycollate d'amidon | 5,00 |
| Alkyle polysiloxanes microencapsulé (antimousse) (12) | 0,10 |
| Emulsion aqueuse d'alkyle polysiloxanes (antimousse) (12) | 47,06 |

**Dénominations commerciales des co-formulants utilisés dans les exemples 1 à 5.**

(1) Mowiol 3/83 - Hoechst AG
(2) Mowiol 4/88 - Hoechst AG
(3) Tamol NN 8906 - BASF AG
(4) Reax 88 A - Westvaco Corp.
(5) Sipon LCS 98 - Sidobre Sinnova
(6) Solvesso 200 - EXXON
(7) Wessalon S-Degussa AG
(8) Vert Solvaperm G - Hoechst AG
(9) Agent dispersant HOE S 1494 - Hoechst AG

Les compositions mentionnées dans les exemples 1 à 5 ont été conformées en granulés dispersables dans l'eau suivant la technique d'agglomération d'une poudre contenant la matière active carbamate (à savoir le pyrimicarbe) diluée avec de la silice et broyée au préalable avant d'être mélangée aux autres co-formulants par une émulsion de type "huile dans eau" contenant la matière active pyréthrinoïde (à savoir la deltaméthrine).
L'opération s'effectue dans un flux d'air.
Dans le cas de l'exemple 1, l'agglomération est obtenue par pulvérisation de 135,8 g d'émulsion aqueuse sur un lit de 154,2 g de poudre, à la température de 40°C. Le granulé est alors séché en élevant la température de l'air à l'entrée à 70°C. A l'issue du séchage, on tamise de manière à obtenir des granulés de taille comprise entre 0,3 et 1,5 mm, en moyenne égale à environ 1,0 mm.

Détails de préparation

**Première phase : préparation de l'émulsion de type "huile dans eau"**

**Préparation de la phase aqueuse -A- :**

Dissolution du Mowiol 3/83 dans l'eau acidifiée par de l'acide citrique. La phase aqueuse peut éventuellement être chauffée jusqu'à 60°C pour faciliter la dissolution du Mowiol 3/83.

| | |
|---|---|
| Eau | 60,00 g |
| Mowiol 3/83 | 12,00 g |
| Acide citrique | 0,76 g |
| | 72,76 g |

**Préparation de la phase organique -B- :**

Solubilisation de la deltaméthrine dans le Solvesso 200. La quantité de solvant à savoir l'hydrocarbure aromatique, engagée dans la phase organique est le double de la concentration finale. On considère, en effet, que 50 % p/p de solvant organique s'évapore lors de l'étape de granulation.

| | |
|---|---|
| Deltaméthrine technique (98,5 %) | 3,04 g |
| Solvesso 200 | 60,00 g |
| | 63,04 g |

**Préparation de l'émulsion de type "huile dans eau" -C- :**

Addition de la phase organique -B- dans la phase aqueuse -A- à température ambiante et homogénéisation de l'émulsion à l'aide d'une ultradisperseuse SILVERSON L4R.

**Deuxième phase : préparation de la poudre introduite en pied de cuve dans le granulateur**

Mélange du pyrimicarbe prémix broyé et des co-formulants dans un mortier et homogénéisation dans un broyeur-mélangeur.

Introduction de la poudre en pied de cuve dans le granulateur, dans un flux d'air.

| | |
|---|---|
| Pyrimicarbe prémix broyé (85 %) | 47,2 g |
| Mowiol 3/83[®] | 40,0 g |
| Mowiol 4/88[®] | 34,0 g |
| Tamol NN 8906[®] | 18,0 g |
| Reax 88 A[®] | 6,0 g |
| Sipon LCS 98[®] | 9,0 g |
| | 154,2 g |

**Troisième phase : granulation**

Agglomération de la poudre préparée dans la deuxième phase qui a été introduite en pied de cuve dans le lit d'air fluidisé, par l'émulsion de type "huile dans eau" -C-. La granulation effectuée est un granulation à contre-courant (bouillie pulvérisée et courant d'air à contre-courant). La granulation s'effectue à une température de l'ordre de 40°C. Après séchage final, on obtient des granulés qui sont tamisés de manière à obtenir des granulés de taille comprise entre 0,15 et 2,0 mm, en moyenne égale à environ 1,0 mm.

La première phase de la préparation des compositions décrites dans les exemples 1 et 2 s'applique également aux exemples 3 à 5. Le colorant est introduit dans la phase organique.

Par contre, dans la deuxième phase, à savoir la préparation de la poudre introduite en pied de cuve, on introduit, soit le Wessalon S (exemple 3), soit l'agent dispersant HOE S 1494 (exemples 4 et 5) en lieu et place du Tamol 8906 et du Sipon LCS 98.

La troisième phase décrite ci-dessus s'applique également aux exemples 2 à 5.

On obtient, dans le cas des exemples 1 à 5, des granulés dont on détermine le taux de dispersabilité ("TD") qui est de 70-90 % et le taux de suspensibilité ("TS") qui est de 90-100 %.

Etude de stabilité

On a étudié le comportement au stockage des granulés des exemples 1 à 5.

Ces granulés sont conservés pendant 4 semaines à 50°C et pendant 6 semaines en respectant un cycle selon lequel la température est maintenue à -6°C pendant 6 heures, augmentée jusqu'à +46°C en 6 heures, maintenue à +46°C pendant 6 heures, redescendue à -6°C en 6 heures, et maintenue à -6°C pendant 6 heures et ainsi de suite pendant 6 semaines. Ces granulés conservent leurs propriétés initiales. En effet les caractéristiques suivantes n'ont pas changé de façon significative : aspect, dispersabilité, teneur en deltaméthrine, teneur en pyrimicarbe, dilution.

Etude biologique des granulés de l'invention

Les granulés décrits ci-avant sont melangés à de l'eau à raison de 0,5 à 0,75 kg de granulés pour des volumes de bouillies variant de 150 à 500 litres d'eau, de préférence variant entre 250 et 300 litres d'eau. On obtient ainsi des bouillies diluées qu'on pulvérise à raison de 250-300 l/ha sur différentes cultures infestées (céréales, colza, pois, betteraves, cultures légumières). Une excellente activité insecticide est obtenue sur ces différentes cultures.

**Revendications**

1. Les granulés émulsionnables dans l'eau renfermant en quantités pondérales :

   - de 0,1 à 10 % de pyréthrinoïdes,
   - de 5 à 50 % d'insecticides choisis dans la classe des carbamates, dilués avec de la silice,
   - de 5 à 70 % de solvant aromatique,
   - de 10 à 70 % d'un ou plusieurs polymères solubles dans l'eau permettant d'adsorber une solution organique de pyréthrinoïde.

2. Les granulés selon la revendication 1, dans lesquels le ou les polymères hydrosolubles sont des alcools polyvinyliques.

3. Les granulés selon la revendication 1 ou 2, renfermant de 25 à 55 % d'une association de deux polymères hydrosolubles de caractère hydrophile différent.

4. Les granulés selon la revendication 3, caractérisés en ce que les deux polymères hydrosolubles sont deux alcools polyvinyliques obtenus par hydrolyse partielle d'acétate de polyvinyle de viscosité 3 mPa.s ou Mowiol 3/83[®] et d'acétate de polyvinyle de viscosité 4 mPa.s ou Mowiol 4/88[®].

5. Les granulés selon l'une quelconque des revendications 1 à 4 renfermant en outre, en quantités pondérales de 0,1 à 20% d'un ou plusieurs agents dispersants, de 0 à 10% d'un agent mouillant, de 0 à 20% d'un agent diluant, de 0 à 0,5% d'un colorant, de 0,1 à 3% d'un agent stabilisant.

6. Les granulés selon la revendication 5, renfermant de 2 à 15 % d'un ou plusieurs agents dispersants, de 0 à 6 % d'un agent mouillant, de 0,5 à 2 % d'un agent stabilisant, de 0 à 10% d'un agent diluant et de 0 à 0,05% d'un colorant.

7. Les granulés selon l'une quelconque des revendications 1 à 6 dans lesquels le pyréthrinoïde est choisi dans le groupe des produits suivants : la deltaméthrine, la cyperméthrine, l'alphaméthrine, la tralométhrine, la cyalothrine, le fenvalérate, la cyfluthrine, le flucythrinate, le fluvalinate, la fenpropathrine, la téfluthrine, la bifenthrine, l'acrinathrine, la bétacyfluthrine, le taufluvalinate, la lambdacyalothrine et l'esfenvalérate.

**8.** Les granulés selon la revendication 7 dans lesquels le pyréthrinoïde est la deltaméthrine.

**9.** Les granulés selon l'une quelconque des revendications 1 à 8 dans lesquels l'insecticide non pyréthrinoïde est choisi dans la classe des carbamates sous forme solide.

**10.** Les granulés selon la revendication 9, dans lesquels le carbamate est le pyrimicarbe, le thiodicarbe, le carbaryl, le dioxacarbe, le méthomyl, l'aldicarbe, l'isoprocarbe, le thiofanox, le bendicarbe, le benfucarbe, le furathiocarbe, le thiazamate.

**11.** Les granulés selon la revendication 10, dans lesquels le carbamate est le pyrimicarbe.

**12.** Les granulés selon la revendication 11 renfermant en quantité pondérale :

- de 0,5 à 2 % de deltaméthrine,
- de 15 à 50 % de pyrimicarbe,
- de 20 à 30 % d'alcool polyvinylique de viscosité 3 mPa.s ou Mowiol 3/83$^{®}$
- de 10 à 20 % d'alcool polyvinylique de viscosité 4 mPa.s ou Mowiol 4/88$^{®}$
- et de 10 à 20 % d'hydrocarbure aromatique SOLVESSO 200$^{®}$ EXXON.

**13.** Les granulés selon la revendication 12 renfermant en outre :

- de 0 à 6 % de lauryl sulfate de sodium (mouillant),
- de 0,2 à 1 % d'acide citrique (stabilisant),
- de 5 à 10 % de polycondensat d'alkylnaphtalène sulfonate de sodium et de formol ou de 2 à 12% de condensat sulfoné de phénol et de crésol avec du formaldéhyde (dispersant),
- de 0 à 6% de sel de sodium d'acides lignosulfoniques polymérisés,
- jusqu'à 10% de silice,
- de 0 à 0,05% de colorant.

**14.** Les granulés selon l'une quelconque des revendications 1 à 13 de diamètre compris entre 0,1 et 3 mm et de préférence entre 0,15 et 2 mm.

**15.** Procédé de préparation des granulés selon l'une quelconque des revendications 1 à 14, caractérisé en ce que

1 - on prépare une émulsion du type "huile dans l'eau"

- en préparant d'une part une phase aqueuse A, en dissolvant le polymère hydrosoluble dans l'eau,
- en préparant d'autre part une phase organique B par dissolution du pyréthrinoïde dans un solvant aromatique,
- en ajoutant la phase organique B dans la phase aqueuse A et en homogénéisant l'émulsion ainsi obtenue,

2 - on prépare une poudre contenant le carbamate en mélangeant le carbamate sous forme de premix broyé avec de la silice, avec un ou plusieurs des éléments suivants : un ou plusieurs polymères hydrosolubles, un ou plusieurs dispersants avec ou sans un mouillant, avec ou sans un agent diluant,
3 - on introduit la poudre préparée en pied de cuve dans un granulateur,
4 - on pulvérise dans un granulateur l'émulsion de type "huile dans l'eau" sur la poudre en mouvement dans un courant d'air (granulation à contre-courant),
5 - on sèche les granulés ainsi obtenus,
6 - on tamise les granulés obtenus pour obtenir la granulométrie souhaitée.

**16.** Procédé selon la revendication 15, caractérisée en ce que la granulation est une granulation dans un flux d'air.

**17.** Procédé selon la revendication 15 ou 16 caractérisé en ce que pour obtenir l'émulsion du type huile dans l'eau, on utilise une phase aqueuse renfermant un alcool polyvinylique obtenu par hydrolyse partielle d'acétate de polyvinyle de viscosité 3 mPa.s, et que pour préparer la poudre utilisée en pied de cuve, on mélange le carbamate avec un mélange d'alcool polyvinylique obtenu par hydrolyse partielle d'acétate de polyvinyle de viscosité 3 mPa.s et d'acétate de polyvinyle de viscosité 4 mPa.s.

18. Compositions pesticides destinées au traitement des cultures, obtenues en émulsionnant les granulés définis selon l'une quelconque ds revendications 1 à 14 ou obtenus selon l'une quelconque des revendications 15 à 17, dans l'eau.

19. Application des compositions selon la revendication 18, caractérisée en ce que l'on répand lesdites compositions à raison de 4,5 g à 50 g de pyréthrinoïde par hectare et de 100 g à 200 g de carbamate par hectare.

20. Application selon la revendication 19, caractérisée en ce que l'on répand lesdites compositions à raison de 5 g à 7,5 g de deltaméthrine par hectare et de 100 à 150 g de pyrimicarbe par hectare.

**Claims**

1. Granules which are emulsifiable in water containing in the following quantities by weight:

   - 0.1 to 10% of pyrethrinoids,
   - 5 to 50% of insecticides chosen from the class of carbamates, diluted with silica,
   - 5 to 70% of an aromatic solvent,
   - 10 to 70% of one or more polymers which are soluble in water allowing an organic solution of pyrethrinoid to be absorbed.

2. Granules according to claim 1 in which the hydrosoluble polymer or polymers are polyvinyl alcohols.

3. Granules according to claim 1 or 2 containing 25 to 55% of a combination of two hydrosoluble polymers of different hydrophilic character.

4. Granules according to claim 3, characterized in that the two hydrosoluble polymers are two polyvinyl alcohols obtained by partial hydrolysis of polyvinyl acetate with a viscosity of 3 mPa.s or Mowiol 3/83® and polyvinyl acetate with a viscosity of 4 mPa.s or Mowiol 4/88®.

5. Granules according to one of claims 1 to 4 containing, in addition, in quantities by weight, 0.1 to 20% of one or more dispersing agents, 0 to 10% of a wetting agent, 0 to 20% of a diluting agent, 0 to 0.5% of a colouring agent, 0.1 to 3% of a stabilizing agent.

6. Granules according to claim 5 containing 2 to 15% of one or more dispersing agents, 0 to 6% of a wetting agent, 0.5 to 2% of a stabilizing agent, 0 to 10% of a diluting agent and 0 to 0.5% of a colouring agent.

7. Granules according to one of claims 1 to 6 in which the pyrethrinoid is chosen from the group of the following products: deltamethrin, cypermethrin, alphamethrin, tralomethrin, cyalotherin, fenvalerate, cyfluthrin, flucythrinate, fluvalinate, fenpropathrin, tefluthrin, bifenthrin, acrinathrin, betacyfluthrin, taufluvalinate, lambdacyalothrin and esfenvalerate.

8. Granules according to claim 7 in which the pyrethrinoid is deltamethrin.

9. Granules according to any one of claims 1 to 8 in which non-pyrethrinoid insecticide is chosen from the class of carbamates in solid form.

10. Granules according to claim 9 in which the carbamate is pyrimicarb, thiodicarb, carbaryl, dioxacarb, methomyl, aldicarb, isoprocarb, thiofanox, bendicarb, benfucarb, furathiocarb, thiazamate.

11. Granules according to claim 10 in which the carbamate is pyrimicarb.

12. Granules according to claim 11 containing in quantity by weight:

   - 0.5 to 2% of deltamethrin,
   - 15 to 50% of pyrimicarb,
   - 20 to 30% of polyvinyl alcohol with a viscosity of 3 mPa.s or Mowiol 3/83®
   - 10 to 20% of polyvinyl alcohol with a viscosity of 4 mPa.s or Mowiol 4/88®
   - and 10 to 20% of aromatic hydrocarbon SOLVESSO 200® EXXON.

13. Granules according to claim 12 containing, in addition:

 - 0 to 6% of sodium lauryl sulphate (wetting agent),
 - 0.2 to 1% of citric acid (stabilizing agent),
 - 5 to 10% of the polycondensate of sodium alkylnaphthalene sulphonate and formalin or 2 to 12% of the sulphonated condensate of phenol and cresol with formaldehyde (dispersing agent),
 - 0 to 6% of the sodium salt of polymerized lignosulphonic acids,
 - up to 10% of silica,
 - 0 to 0.05% of colouring agent.

14. Granules according to any one of claims 1 to 13 with a diameter comprised between 0.1 and 3 mm and preferably between 0.15 and 2 mm.

15. Preparation process for the granules according to any one of claims 1 to 14, characterized in that

 1 - an emulsion of "oil-in-water" type is prepared

 - on the one hand, by preparing an aqueous phase A, by dissolving the hydrosoluble polymer in water,
 - on the other hand, by preparing an organic phase B by dissolution of the pyrethrinoid in an aromatic solvent,
 - by adding the organic phase B to the aqueous phase A and by homogenizing the emulsion thus obtained,

 2 - a powder containing the carbamate is prepared by mixing the carbamate in the form of a premix ground up with silica, with one or more of the following elements: one or more hydrosoluble polymers, one or more dispersing agents with or without a wetting agent, with or without a diluting agent,
 3 - the powder prepared as a starter is introduced into a granulator,
 4 - the "oil-in-water" type emulsion is sprayed into a granulator onto the powder which is moving in an air current (countercurrent granulation),
 5 - the granules thus obtained are dried,
 6 - the granules obtained are sieved in order to obtain the desired granulometry.

16. Process according to claim 15, characterized in that the granulation is a granulation in an air flow.

17. Process according to claim 15 or 16 characterized in that in order to obtain the oil-in-water type emulsion, an aqueous phase containing a polyvinyl alcohol obtained by partial hydrolysis of a polyvinyl acetate with a viscosity of 3 mPa.s is used, and in that in order to prepare the powder used as a starter, the carbamate is mixed with a mixture of a polyvinyl alcohol obtained by the partial hydrolysis of a polyvinyl acetate with a viscosity of 3 mPa.s and a polyvinyl acetate with a viscosity of 4 mPa.s.

18. Pesticide compositions intended for the treatment of crops obtained by emulsifying the granules defined according to one of claims 1 to 14 or obtained according to any one of claims 15 to 17, in water.

19. Use of the compositions according to claim 18, characterized in that said compositions are spread at the rate of 4.5 g to 50 g of pyrethrinoid per hectare and 100 g to 200 g of carbamate per hectare.

20. Use according to claim 19, characterized in that said compositions are spread at the rate of 5 g to 7.5 g of deltamethrin per hectare and 100 to 150 g pyrimicarb per hectare.

**Patentansprüche**

1. In Wasser emulgierbare Granulate, umfassend in Gewichtsmengen:

 - 0,1 % bis 10 % Pyrethrinoide,
 - 5 % bis 50 % aus der Klasse der Carbamate gewählte Insektizide, verdünnt mit Kieselerde,
 - 5 % bis 70 % aromatisches Lösungsmittel,
 - 10 % bis 70 % von einem oder mehreren in Wasser löslichen Polymeren, die ermöglichen, eine organische Pyrethrinoid-Lösung zu adsorbieren.

**2.** Granulate nach Anspruch 1, worin das oder die wasserlöslichen Polymere Polyvinylalkohole sind.

**3.** Granulate nach Anspruch 1 oder 2, umfassend 25 % bis 55 % einer Assoziation von zwei wasserlöslichen Polymeren mit unterschiedlichem hydrophilen Charakter.

**4.** Granulate nach Anspruch 3, dadurch gekennzeichnet, daß die zwei wasserlöslichen Polymere zwei Polyvinylalkohole sind, die durch partielle Hydrolyse von Polyvinylacetat mit einer Viskosität von 3 mPa • s oder Mowiol 3/83$^{®}$ und von Polyvinylacetat mit einer Viskosität von 4 mPa • s oder Mowiol 4/88$^{®}$ erhalten wurden.

**5.** Granulate nach irgendeinem der Ansprüche 1 bis 4, umfassend außerdem in Gewichtsmengen 0,1 % bis 20 % von einem oder mehreren Dispergierungsmitteln, 0 % bis 10 % eines Netzmittels, 0 % bis 20 % eines Verdünnungsmittels, 0 % bis 0,5 % eines Farbstoffes und 0,1 % bis 3 % eines Stabilisators.

**6.** Granulate nach Anspruch 5, umfassend 2 % bis 15 % von einem oder mehreren Dispergierungsmitteln, 0 % bis 6 % eines Netzmittels, 0,5 % bis 2 % eines Stabilisators, 0 % bis 10 % eines Verdünnungsmittels und 0 % bis 0,05 % eines Farbstoffes.

**7.** Granulate nach irgendeinem der Ansprüche 1 bis 6, bei denen das Pyrethrinoid aus der Gruppe der folgenden Produkte gewählt wird: Deltamethrin, Cypermethrin, Alphamethrin, Tralomethrin, Cyalothrin, Fenvalerat, Cyfluthrin, Flucythrinat, Fluvalinat, Fenpropathrin, Tefluthrin, Bifenthrin, Acrinathrin, Betacyfluthrin, Taufluvalinat, Lambdacyalothrin und Esfenvalerat.

**8.** Granulate nach Anspruch 7, worin das Pyrethrinoid Deltamethrin ist.

**9.** Granulate nach irgendeinem der Ansprüche 1 bis 8, bei denen das nicht-pyrethrinoide Insektizid aus der Klasse der Carbamate in fester Form gewählt wird.

**10.** Granulate nach Anspruch 9, worin das Carbamat Pyrimicarb, Thiodicarb, Carbaryl, Dioxacarb, Methomyl, Aldicarb, Isoprocarb, Thiofanox, Bendicarb, Benfucarb, Furathiocarb oder Thiazemat ist.

**11.** Granulate nach Anspruch 10, worin das Carbamat Pyrimicarb ist.

**12.** Granulate nach Anspruch 11, umfassend in Gewichtsmengen:

- 0,5 % bis 2 % Deltamethrin,
- 15 % bis 50 % Pyrimicarb,
- 20 % bis 30 % Polyvinylalkohol mit einer Viskosität von 3 mPa • s oder Mowiol 3/83$^{®}$,
- 10 % bis 20 % Polyvinylalkohol mit einer Viskosität von 4 mPa • s oder Mowiol 4/88$^{®}$, und
- 10 % bis 20 % aromatischen Kohlenwasserstoff SOLVESSO 200$^{®}$ EXXON.

**13.** Granulate nach Anspruch 12, umfassend außerdem:

- 0 % bis 6 % Natrium-laurylsulfat (Netzmittel),
- 0,2 % bis 1 % Citronensäure (Stabilisator),
- 5 % bis 10 % Polykondensat von Natrium-alkylnaphthalin-sulfonat und Formalin oder 2 % bis 12 % sulfoniertes Kondensat von Phenol und Kresol mit Formaldehyd (Dispergierungsmittel),
- 0 % bis 6 % Natriumsalz von polymerisierten Lignosulfonsäuren,
- bis zu 10 % Kieselerde,
- 0 % bis 0,05 % Farbstoff.

**14.** Granulate nach irgendeinem der Ansprüche 1 bis 13 mit einem Durchmesser zwischen 0,1 mm und 3 mm und vorzugsweise zwischen 0,15 mm und 2 mm.

**15.** Verfahren zur Herstellung der Granulate nach irgendeinem der Ansprüche 1 bis 14, dadurch gekennzeichnet, daß man

1 - eine Emulsion vom Typ "Öl-in-Wasser" herstellt,

- indem man einerseits eine wäßrige Phase A durch Auflösen des wasserlöslichen Polymers in Wasser herstellt,

- indem man andererseits eine organische Phase B durch Auflösen des Pyrethrinoides in einem aromatischen Lösungsmittel herstellt,

- indem man die organische Phase B in die wäßrige Phase A einträgt und die auf diese Weise erhaltene Emulsion homogenisiert,

2 - ein das Carbamat enthaltende Pulver herstellt, indem man das Carbamat in Form eines zerkleinerten Premix mit der Kieselerde, mit einem oder mehreren der folgenden Elemente vermischt: einem oder mehreren wasserlöslichen Polymeren, einem oder mehreren Dispergierungsmitteln mit oder ohne Netzmittel, mit oder ohne Verdünnungsmittel,

3 - das hergestellte Pulver als Ansatz in einen Granulator einträgt,

4 - in dem Granulator die Emulsion vom Typ "Öl-in-Wasser" auf das Pulver sprüht, und zwar in Bewegung eines Luftstromes (Granulierung im Gegenstrom),

5 - die auf diese Weise erhaltenen Granulate trocknet,

6 - die erhaltenen Granulate siebt, um die gewünschte Granulometrie zu erhalten.

16. Verfahren nach Anspruch 15, dadurch gekennzeichnet, daß die Granulierung eine Granulierung in einem Luftstrom ist.

17. Verfahren nach Anspruch 15 oder 16, dadurch gekennzeichnet, daß man zur Herstellung der Emulsion vom Typ Öl-in-Wasser eine wäßrige Phase verwendet, die einen Polyvinylalkohol umfaßt, erhalten durch partielle Hydrolyse von Polyvinylacetat mit einer Viskosität von 3 mPa • s, und zur Herstellung des als Ansatz eingesetzten Pulvers das Carbamat mit einer Mischung von Polyvinylalkohol, erhalten durch partielle Hydrolyse von Polyvinylacetat mit einer Viskosität von 3 mPa • s und von Polyvinylacetat mit einer Viskosität von 4 mPa • s, vermischt.

18. Pestizide Zusammensetzungen für die Behandlung von Kulturen, erhalten durch Emulgieren der nach irgendeinem der Ansprüche 1 bis 14 definierten oder nach irgendeinem der Ansprüche 15 bis 17 erhaltenen Granulate in Wasser.

19. Verwendung der Zusammensetzungen nach Anspruch 18, dadurch gekennzeichnet, daß man die genannten Zusammensetzungen in einem Verhältnis von 4,5 g bis 50 g Pyrethrinoid pro Hektar und 100 g bis 200 g Carbamat pro Hektar austeilt.

20. Verwendung der Zusammensetzungen nach Anspruch 19, dadurch gekennzeichnet, daß man die genannten Zusammensetzungen in einem Verhältnis von 5 g bis 7,5 g Deltamethrin pro Hektar und 100 g bis 150 g Pyrimicarb pro Hektar austeilt.